# EUROPEAN PATENT APPLICATION

(11) **EP 2 568 213 A2**
(43) Date of publication of application: **13.03.2013**
(21) Application number: 12183155.6
(22) Date of filing: 05.09.2012
(51) Int. Cl.: F21V 14/08

(54) **Vehicular Headlamp**

(30) Priority: 08.09.2011 JP 2011195735
(71) Applicant: Koito Manufacturing Co., Ltd., Tokyo 108-8711 (JP)
(72) Inventor: Ohshio, Hirohiko, Shizuoka-shi, Shizuoka 424-8764 (JP); Nomura, Yukio, Shizuoka-shi, Shizuoka 424-8764 (JP)
(74) Representative: Grünecker, Kinkeldey, Stockmair & Schwanhäusser

(57) **Abstract**

A light source (11) that emits light, a reflector (10) that reflects the light emitted by the light source, and a projection lens (9) that projects and irradiates the light emitted by the light source are provided. A fixed shade (13) that partially blocks the light emitted by the light source, a movable shade (14) that is movable with respect to the fixed shade and can partially block the light emitted by the light source, a drive motor (19) that moves the movable shade, and a drive member (20) that is provided between the movable shade and the drive motor and functions as a shade control means for controlling a moving state of the movable shade are provided.

## Description

### BACKGROUND OF THE INVENTION

### 1. Field of the Invention

The present invention relates to a vehicular headlamp. More specifically, the present invention relates to a vehicular headlamp that can achieve various radiation modes by changing a blocking state of light with a movable shade.

### 2. Description of Related Art

An example of a vehicular headlamp is one in which a lamp unit with a light source is disposed in an outer box of a lamp that is formed of a cover and a lamp housing.

The lamp unit is provided with a projection lens that projects, to the front, light emitted by the light source and a reflector that reflects, toward the projection lens, the light emitted by the light source.

As a vehicular headlamp such as above, there is one that includes a fixed shade that partially blocks the light emitted by the light source and a movable shade that is movable with respect to the fixed shade and can partially block the light emitted by the light source (for example, see Japanese Patent Application Publication No. 2010-257909 (JP 2010-257909 A) and Japanese Patent Application Publication No. 2010-40459 (JP 2010-40459 A)).

Vehicular headlamps that are disclosed in JP 2010-257909 A and JP 2010-40459 A are configured to achieve various radiation modes such as a low-beam mode in which the headlamps radiate light to an area ahead at close range and a high-beam mode in which the headlamps radiate light to an area ahead at long range by pivoting the movable shades with respect to the fixed shade to predetermined positions with a driving force of a drive motor and thus by changing a blocking state of the light emitted by a light source.

However, in the vehicular headlamp such as above, in which the movable shade is moved by the driving force of the drive motor, there is a possibility that deterioration in a moving state of the movable shade occurs, depending on a state of the transmission of the driving force from the drive motor to the movable shade.

For example, for the purpose of improving durability of the drive motor, there is a case where it is desired to set a pivotal movement angle of the movable shade smaller than a rotational angle of the drive motor. If a reduction gear is used to increase a reduction gear ratio in such a case, a gear module needs to be downsized or plural gears are needed, and consequently, the reduced durability of gear teeth may cause deterioration in the moving state of the movable shade.

Meanwhile, a vehicular headlamp has been available that is configured to restrict the movement of the movable shade by a stopper provided in a predetermined position. In such a vehicular headlamp, for example, when a moving speed of the movable shade becomes too fast due to the transmission state of the driving force of the drive motor, the movable shade contacts the stopper with a large force, and consequently, there is a possibility that deterioration in the moving state of the movable shade occurs.

In addition, if the moving speed of the movable shade is too fast, it may cause application of a powerful impact between the gear teeth or cause wear of the members, especially at the beginning of the movement, and consequently, the moving state of the movable shade may become unstable.

### SUMMARY OF THE INVENTION

An object of the present invention is to provide a vehicular headlamp in which a moving state of a movable shade can be moderated.

The vehicular headlamp according to an aspect of the present invention includes: a light source that emits light; a reflector that reflects the light emitted by the light source; a projection lens that projects and irradiates the light emitted by the light source; a fixed shade that partially blocks the light emitted by the light source; a movable shade that is movable with respect to the fixed shade and is capable of partially blocking the light emitted by the light source; a drive motor that moves the movable shade; shade control means that is provided between the movable shade and the drive motor and is configured to control a moving state of the movable shade.

Because the driving force of the drive motor is transmitted to the movable shade with the moving state of the movable shade controlled by the shade control means, it is possible to moderate the moving state of the movable shade.

In the vehicular headlamp according to the above aspect, it is preferable that the shade control means be speed change control means connecting between the movable shade and the drive motor and configured to suppress rapid change in speed of movement of the movable shade when the movable shade starts to be moved by the drive motor.

The rapid change in speed of movement of the movable shade when the movable shade starts to be moved by the drive motor is suppressed, the radiation mode is not switched instantly, and thus it is possible to suppress the occurrence of a sense of discomfort to a driver.

In the vehicular headlamp according to the above aspect, it is preferable that the speed change control means be configured to suppress the rapid change in speed of movement via a mechanical structure.

In the vehicular headlamp according to the above aspect, it is preferable that the speed change control means include a rotary body that is rotated by the drive motor, the rotary body having an actuating shaft that is positioned so as to be offset from a center of rotation of the rotary body, and the speed change control means be configured such that a direction of movement of the actuating shaft and a direction of movement of the point of contact between the actuating shaft and the movable shade form an angle between 45° and 90° inclusive when the movable shade starts to be moved by the drive motor.

According to the above configuration, it is possible to reduce the amount of movement of the movable shade corresponding to the same rotational angle of the actuating shaft when the movable shade starts to be moved by the drive motor, so that it is possible to suppress the rapid change in speed of movement of the movable shade.

In the vehicular headlamp according to the above aspect, it is preferable that the shade control means include a drive member that has a connecting section connected to a power output shaft of the drive motor and an actuating shaft located on an outer peripheral side of the power output shaft and projecting from the connecting section, and that the drive member be rotated by the driving force of the drive motor and that the actuating shaft press the movable shade within a part of a rotational range of the drive member and move the movable shade.

According to the above configuration, the movable shade can be moved by a small angle with respect to a rotational angle of the drive motor without use of a reduction gear, so that a defect can be prevented such as failure in movement of the movable shade, which can be caused by reduced durability of the gear teeth when the reduction gear is used, and the favorable moving state of the movable shade can be ensured.

In the vehicular headlamp according to the above aspect, it is preferable that the movable shade is provided with a worm wheel section and that the shade control means include a worm that is connected to the power output shaft of the drive motor.

According to the above configuration, because the movable shade is moved by the worm and the reduction gear is not used, it is possible to prevent a defect such as failure in movement of the movable shade, which can be caused by reduced durability of the gear teeth when large reduction gear ratio is obtained using the reduction gear, and the favorable moving state of the movable shade is ensured.

In the vehicular headlamp according to the above aspect, it is preferable that the speed change control means be configured to suppress the rapid change in speed of movement using inertia.

In the vehicular headlamp according to the above aspect, it is preferable that a driven gear section be provided on the movable shade and that the shade control means include a flywheel having a transmission gear section, and an overdrive gear that has a first gear section connected to the power output shaft of the drive motor and meshing with the driven gear section of the movable shade and a second gear section meshing with the transmission gear section of the flywheel.

According to the above aspect, because the movable shade is moved by transmitting power of the flywheel, a moving speed of the movable shade is decreased, and thus the movable shade is moved at low speed. Therefore, the favorable moving state of the movable shade can be ensured.

In the vehicular headlamp according to the above aspect, it is preferable that the speed change control means be configured to suppress the rapid change in speed of movement by transmitting a driving force from the drive motor to the movable shade via an elastic body.

In the vehicular headlamp according to the above aspect, it is preferable that the elastic body be a spiral spring.

In the vehicular headlamp according to the above aspect, it is preferable that the movable shade be provided with the driven gear section and that the shade control means include a case body that has a drive gear section meshing with the driven gear section, a rotary drive body that is connected to the power output shaft of the drive motor and is rotated with respect to the case body along with the rotation of the drive motor, and a spiral spring, one end of which is connected to the case body and the other end of which is connected to the rotary drive body.

According to the above configuration, the moving speed of the movable shade is decreased, and thus the movable shade is moved at low speed. Therefore, the favorable moving state of the movable shade can be ensured.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a vehicular headlamp of an embodiment of the present invention together with FIG. 2 to FIG. 18 and is a schematic longitudinal sectional view of the vehicular headlamp;
FIG. 2 is a perspective view of a lamp unit;
FIG. 3 is a schematic front view that shows a state where a movable shade is in a blocking position;
FIG. 4 is an enlarged exploded perspective view of a shade drive mechanism;
FIG. 5 shows operation of a drive member together with FIG. 6 and FIG. 7 and is an enlarged front view that shows a state where an actuating shaft is not in contact with a sliding protrusion of the movable shade when a drive member is rotated;
FIG. 6 is an enlarged front view that shows a state where the actuating shaft is in contact with the sliding protrusion of the movable shade when the drive member is rotated;
FIG. 7 is an enlarged front view that shows a state where the actuating shaft is in contact with the sliding protrusion of the movable shade when the drive member is rotated and the movable shade is pivoted;
FIG. 8 is a schematic front view that shows a state where one movable shade is pivoted to an unblocking position;
FIG. 9 is a schematic front view that shows a state where another movable shade is pivoted to an unblocking position;
FIG. 10 is a schematic front view that shows a state where both of the movable shades are pivoted to the unblocking positions;
FIG. 11 is a schematic front view that shows the shade drive mechanism and the movable shade according to a first modification;
FIG. 12 is a schematic front view that shows the shade drive mechanism and so on according to a second modification;
FIG. 13 shows, together with FIG. 14 to FIG. 16, a configuration of the shade drive mechanism according to the second modification in which a weighted section and a transmission gear section are separated, and is an exploded perspective view;
FIG. 14 is a schematic rear view that shows a relationship between an actuated protrusion and an actuating section when the weighted section and the transmission gear section are integrally rotated;
FIG. 15 is a schematic rear view that shows a relationship between the actuated protrusion and the actuating section, following FIG. 14, when the weighted section is rotated while the transmission gear stops being rotated;
FIG. 16 is a schematic rear view that shows a relationship between the actuated protrusion and the actuating section, following FIG. 15, when the weighted section stops being rotated;
FIG. 17 shows, together with FIG. 18, a shade drive mechanism according to a third modification and is a schematic front view that shows the shade drive mechanism and the movable shade; and
FIG. 18 is a schematic sectional view that shows the shade drive mechanism and the movable shade.

### DETAILED DESCRIPTION OF EMBODIMENTS

Description will hereinafter be made of an embodiment of a vehicular headlamp according to the present invention with reference to the attached drawings.

A vehicular headlamp 1 is attached to and disposed at each of right and left ends on a front end of a vehicle. The words/phrases representing directions, such as right, left, front, rear, above, below, vertical, lateral, etc. herein means directions in relation to the vehicle, or the vehicular lamp mounted on the vehicle.

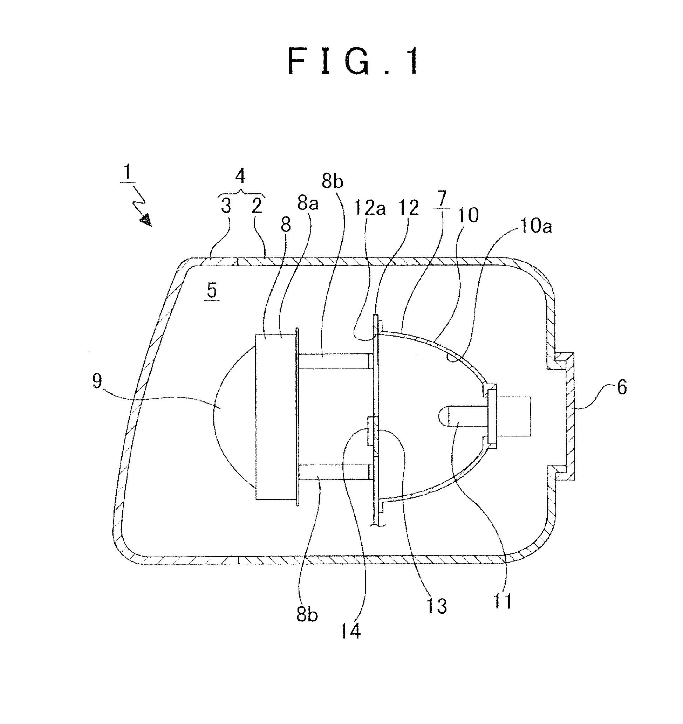

As shown in FIG. 1, the vehicular headlamp 1 includes a lamp housing 2 with a recessed section that opens to the front and a cover 3 that closes an opening of the lamp housing 2. A lamp outer box 4 is formed of the lamp housing 2 and the cover 3, and an internal space of the lamp outer box 4 constitutes a lamp chamber 5.

An attachment hole 2a that penetrates in a front-rear direction is formed at a rear end portion of the lamp housing 2. A rear cover 6 is attached to the rear end portion of the lamp housing 2 to close the attachment hole 2a.

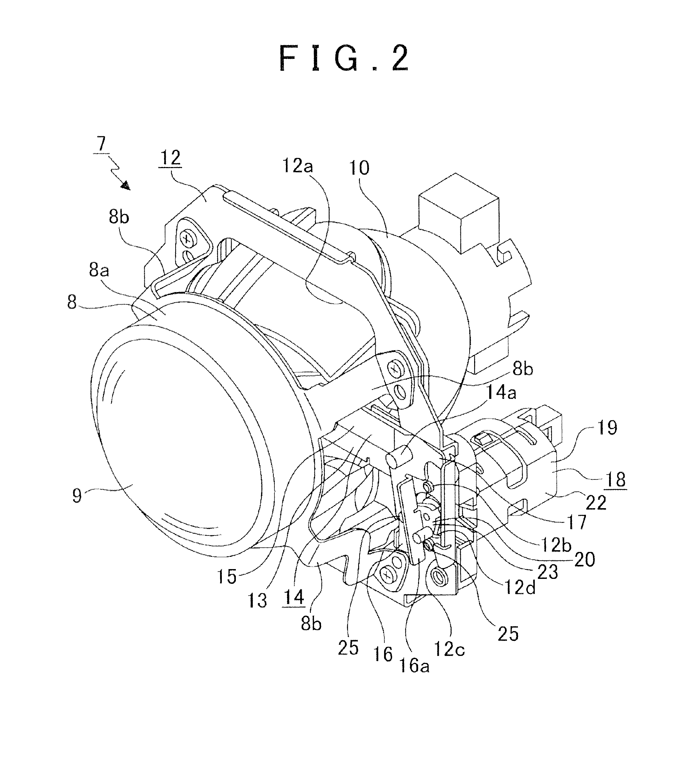

A lamp unit 7 is disposed in the lamp chamber 5. As shown in FIG. 1 and FIG. 2. the lamp unit 7 has a lens holder 8 that is positioned near a front end, a projection lens 9 that is held by the lens holder 8, a reflector 10 that is disposed behind the lens holder 8, a light source 11 that is disposed at a rear end of the reflector 10, and an attachment frame 12 to which predetermined components are attached.

The lens holder 8 is formed of a holding section 8a having a generally circular shape and attachment sections 8b, 8b ... that protrude rearward respectively from the holding section 8a, and the attachment sections 8b, 8b...are provided to be spaced from each other in a circumferential direction.

The projection lens 9 is held by the holding section 8a of the lens holder 8 and has a function of projecting light emitted by the light source 11 to irradiate the light externally.

An inner surface of the reflector 10 is formed as a reflecting surface 10a.

The attachment frame 12 is made of a plate material that is formed in a predetermined shape, and has, in an upper portion thereof, a light transmission hole 12a that penetrates in the front-rear direction. A portion below the light transmission hole 12a of the attachment frame 12 is provided as a fixed shade 13.

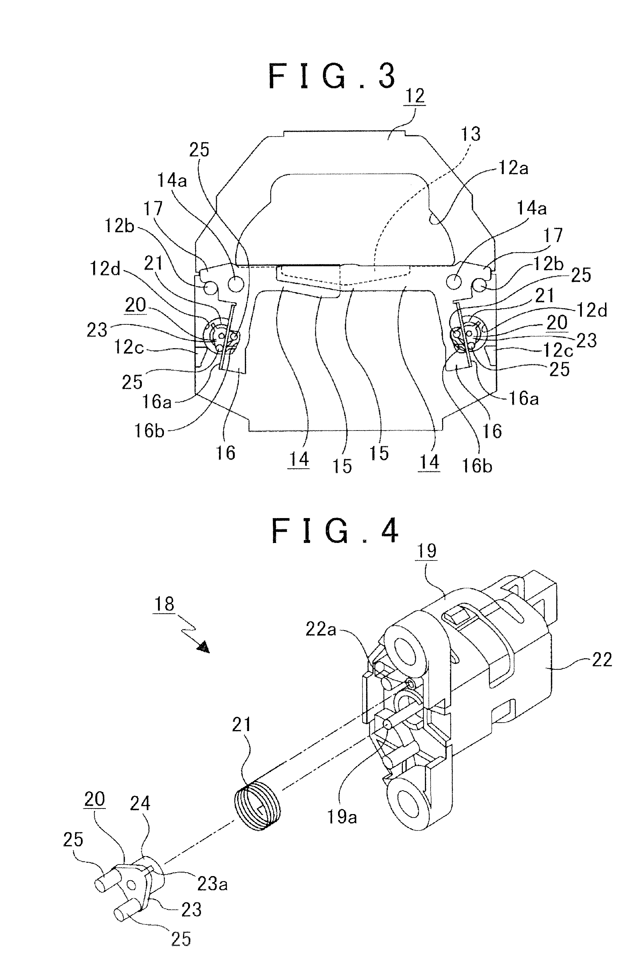

First stoppers 12b, 12b are respectively provided at right and left ends of a center portion of the attachment frame 12 in a vertical direction, and second stoppers 12c, 12c are respectively provided at right and left ends of a lower end portion of the attachment frame 12 (see FIG. 2 and FIG. 3). Through holes 12d, 12d are respectively formed in positions between the first stoppers 12b, 12b and the second stopper 12c, 12c in the attachment frame 12, penetrating the attachment frame 12 in the front-rear direction.

Movable shades 14, 14 that are pivotable with respect to the fixed shade 13 are pivotably supported on the attachment frame 12. The movable shades 14, 14 are arranged to be pivotable between a blocking position where the light emitted by the light source 11 is partially blocked and an unblocking position where the light emitted by the light source 11 is not blocked.

It is noted that the number of the movable shade that is supported on the attachment frame 12 may be one.

The movable shade 14 is formed of a blocking section 15 that extends generally in a lateral direction, an actuated section 16 that protrudes generally downward from an outer end of the blocking section 15, and a restricted section 17 that protrudes generally in a lateral direction from the outer end of the blocking section 15. A pivot 14a is provided in a continuous portion between the blocking section 15 and the restricted section 17.

The actuated section 16 is provided with a sliding protrusion 16a that is formed by bending an outer edge thereof to the front. The actuated section 16 is formed with an insertion locating hole 16b that penetrates in the front-rear direction in the vicinity of the sliding protrusion 16a.

Shade drive mechanisms 18, 18 are respectively provided at right and left ends on a rear surface of the attachment frame 12. The shade drive mechanism 18 has a drive motor 19, a drive member 20 that is connected to a power output shaft 19a of the drive motor 19, and a return spring 21 that urges the drive member 20 in a predetermined direction (see FIG. 4).

The drive motor 19 has a motor case 22 and a motor main body (not shown) that is disposed in the motor case 22, and the power output shaft 19a protrudes forward from the motor case 22. A spring engagement hole 22a is formed in a front surface of the motor case 22 is formed.

The drive member 20 is provided between the movable shade 14 and the drive motor 19 and functions as a shade control means that controls a moving state (pivotal movement state) of the movable shade 14.

The drive member 20 is formed of a base section 23 that faces in the front-rear direction, a connecting section 24 that protrudes rearward from a center portion of the base section 23, and actuating shafts 25, 25 that protrude forward from the base section 23. The base section 23 is provided with a spring engagement piece 23a that protrudes in the lateral direction. The actuating shafts 25, 25 are formed in a shape of a round shaft and provided on an outer peripheral side from the center portion of the base section 23 in a manner that the actuating shafts 25, 25 are spaced from each other in the circumferential direction.

The connecting section 24 is connected to the power output shaft 19a, whereby the drive member 20 is rotated along with rotation of the drive motor 19.

The return spring 21 is a coil spring, for example, and one end thereof is inserted in and engaged with the spring engagement hole 22a of the motor case 22 while the other end thereof is engaged with the spring engagement piece 23a of the base section 23.

The drive member 20 is urged by the return spring 21 in an opposite direction from a direction that the drive member 20 is rotated along with the rotation of the drive motor 19.

In a state where the shade drive mechanism 18 is attached to the rear surface of the attachment frame 12, the drive member 20 is inserted through the through hole 12d of the attachment frame 12, and the actuating shafts 25, 25 are placed at opposite positions from each other with the sliding protrusions 16a of the movable shades 14 interposed therebetween (see FIG. 2 and FIG. 3). The one actuating shaft 25 is inserted in the insertion locating hole 16b.

In a state where the drive motor 19 is not energized, the restricted sections 17, 17 of the movable shades 14, 14 are respectively pressed against and in contact with the first stoppers 12b, 12b of the attachment frame 12 by the urging forces of the return springs 21, 21 (see FIG. 3). At this time, the movable shades 14, 14 are in the blocking positions, with the blocking sections 15, 15 extending in the horizontal direction, and thus a bottom end portion of the light transmission hole 12a is obstructed by the blocking sections 15, 15. The other actuating shaft 25 of the drive member 20 is in contact with the sliding protrusion 16a.

A low-beam radiation mode is set when both of the movable shades 14, 14 are in the blocking positions.

When the drive motor 19 is energized and the drive motor 19 begins to be rotated in a state where the movable shade 14 is in the blocking position, the drive member 20 is rotated along with the rotation of the drive motor 19 against the urging force of the return spring 21.

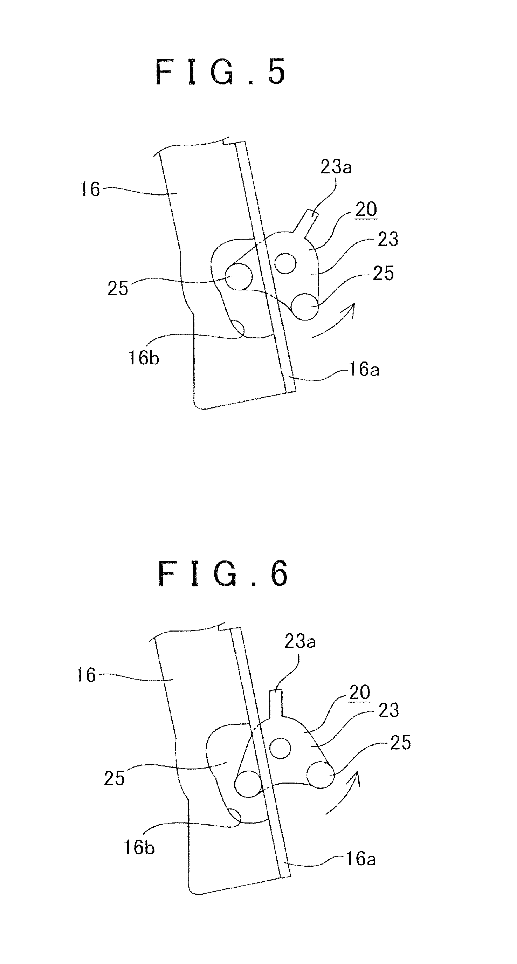

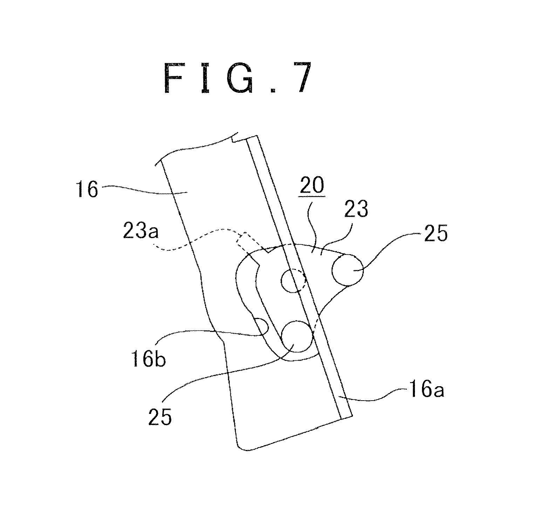

Within a given rotational range of the drive member 20, the actuating shafts 25, 25 do not contact the sliding protrusion 16a (see FIG. 5). When the drive member 20 is rotated at a predetermined angle, the one actuating shaft 25 comes into contact with the sliding protrusion 16a (see FIG. 6). When the drive member 20 keeps being rotated, the sliding protrusion 16a is pressed by the one actuating shaft 25, and the movable shade 14 is pivoted to the unblocking position (see FIG. 7). At this time, the one actuating shaft 25 is slid along the sliding protrusion 16a.

In the vehicular headlamp 1, a pivotal movement angle of the movable shade 14 from the blocking position to the unblocking position is set approximately from 10° to 30°, and a rotational angle of the drive motor 19 for this movement is set approximately 120°, for example.

The movable shade 14 that is pivoted toward the unblocking position is restricted from being pivoted when the actuated section 16 comes into contact with the second stopper 12c of the attachment frame 12, and thus reaches the unblocking position. The movable shade 14 is held in the unblocking position by the continuous energization of the drive motor 19.

When the drive motor 19 stops being energized in a state where the movable shade 14 is in the unblocking position, the drive member 20 is rotated in the direction opposite to the previous direction by the urging force of the return spring 21. Then, the sliding protrusion 16a is pressed by the other actuating shaft 25 within the predetermined rotational range of the drive member 20, and the movable shade 14 is pivoted toward the blocking position. The movable shade 14 is restricted from being pivoted when the restricted section 17 comes into contact with the first stopper 12b of the attachment frame 12, and thus is held in the blocking position.

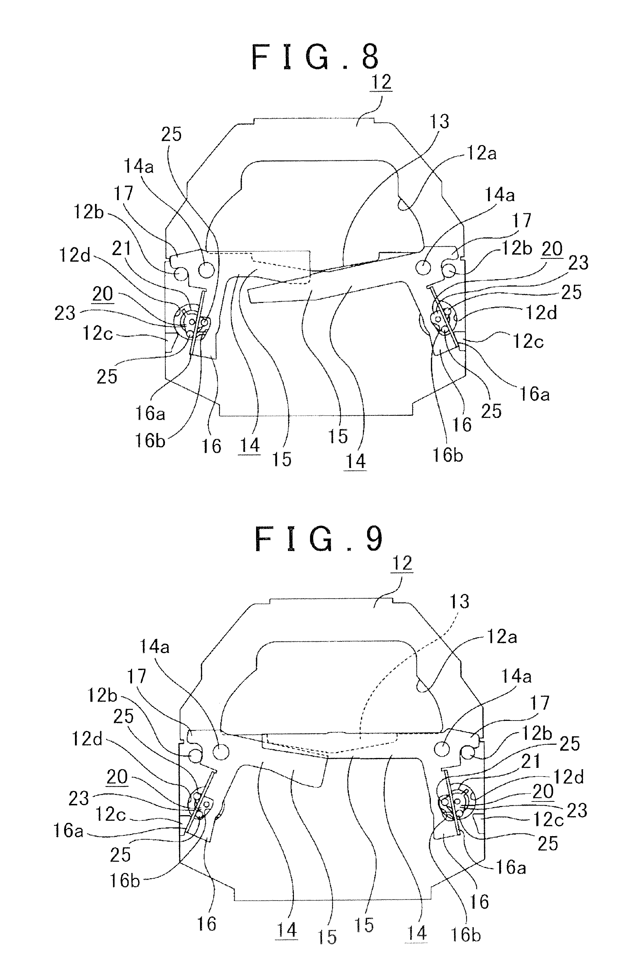

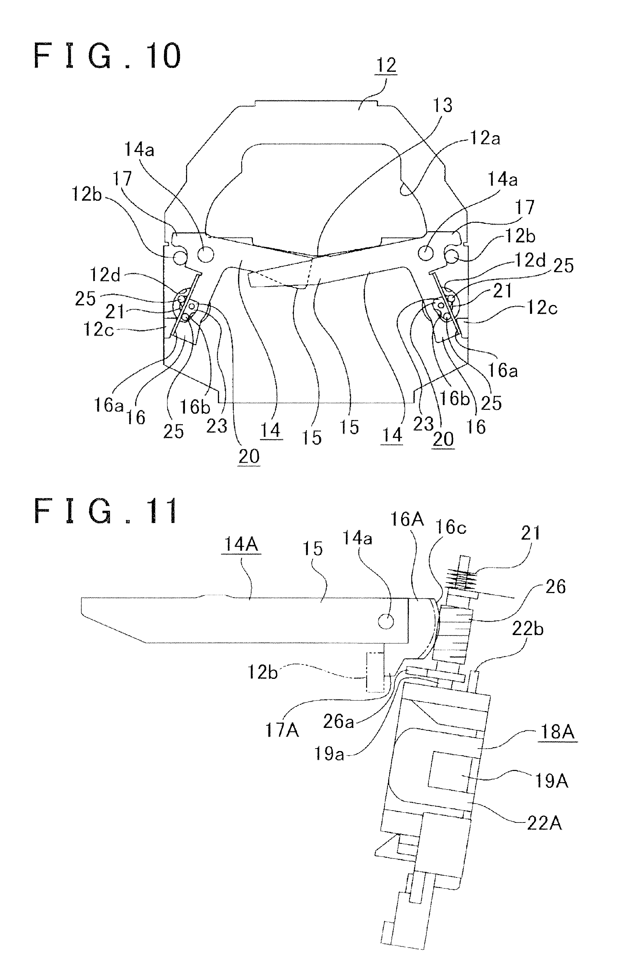

In the vehicular headlamp I, in a state where the one movable shade 14 is held in the blocking position while the other movable shade 14 is held in the unblocking position (see FIG. 8 and FIG. 9), a one-side high-beam radiation mode is set where either a right half or a left half of a light distribution pattern is a high-beam distribution pattern. Also, in a state where both of the movable shades 14, 14 are held in the unblocking positions (see FIG. 10), a high-beam radiation mode is set.

As described above, in the vehicular headlamp 1 that is provided with the shade drive mechanisms 18, 18, the drive member 20 is rotated by the driving force of the drive motor 19. and the actuating shafts 25, 25 press the sliding protrusion 16a of the movable shade 14 within the rotational range of the drive member 20, that is, within part of the rotational range of the drive motor 19, to pivot the movable shade 14.

Accordingly, it is possible without using a reduction gear to pivot the movable shade 14 at a smaller angle than the rotational angle of the drive motor 19, and thus it is possible to prevent a defect such as failure in movement of a movable shade, which can be caused by the decreased durability of gear teeth when the reduction gear is used. Therefore, the favorable moving state of the movable shade 14 is ensured.

In addition, because the rotational angle of the drive motor 19 is set larger than the pivotal movement angle of the movable shade 14, it is possible to prevent pivotal movement failure, which can be caused by wear debris produced from a brush when the rotational angle of the drive motor 19 is set small, and thus, the durability of the drive motor 19 can be improved.

Next, a description will be made of each modification of the shade drive mechanism (see FIG. 11 to FIG. 18). It should be noted that, when a shade drive mechanism according to any of modifications below is used instead of the shade drive mechanism 18 described above, the vehicular headlamp 1 mainly differ in, in addition to the shade drive mechanism, only the constructions of the movable shade and the drive motor. Therefore, only the differences in the constructions of the shade drive mechanism, the movable shade, and so on are explained in detail in the following description of each modification while the other components that have already been described are denoted by the same reference numerals, and thus detailed description thereof will not be repeated.

First, a description will be made of a shade drive mechanism 18A according to a first modification (see FIG. 11).

When the shade drive mechanism 18A according to the first modification is used, a movable shade 14A is used.

The movable shade 14A is formed of the blocking section 15 that extends generally in the lateral direction, an actuated section 16A that protrudes generally in the lateral direction from the outer end of the blocking section 15, and a restricted section 17A that protrudes generally downward from the outer end of the blocking section 15. The pivot 14a is provided in a continuous portion between the blocking section 15 and the actuated section 16A.

A worm wheel section 16c is formed on an outer end of the actuated section 16A.

The shade drive mechanisms 18A, 18A are respectively attached to the right and left ends on the rear surface of the attachment frame 12. The shade drive mechanism 18A has a drive motor 19A, a worm 26 that is connected to the power output shaft 19a of the drive motor 19A, and the return spring 21 that is supported on an upper end of the worm 26.

The drive motor 19A includes a motor case 22A and a motor main body (not shown) that is disposed in the motor case 22A, and the power output shaft 19a protrudes upward from the motor case 22A. An upper surface of the motor case 22A is provided with a stopper pin 22b that protrudes upward.

The worm 26 is provided between the movable shade 14A and the drive motor 19A, and functions as a shade control means that controls a moving state (pivotal movement state) of the movable shade 14A.

The worm 26 is provided with, at the bottom end thereof, a stopper guide protrusion 26a that protrudes in the lateral direction. The worm 26 is connected to the power output shaft 19a and is rotated along with the rotation of the drive motor 19A.

One end of the return spring 21 is engaged with a spring engagement section (not shown) of the attachment frame 12 while the other end thereof is engaged with a spring engagement protrusion (not shown) that is provided on the worm 26. The worm 26 is urged by the return spring 21 in an opposite direction from a direction that the worm 26 is rotated along with the rotation of the drive motor 19A. The worm 26 meshes with the worm wheel section 16c of the movable shade 14A.

When the drive motor 19A is not energized, the restricted section 17A is pressed against and in contact with the first stoppers 12b of the attachment frame 12 by the urging force of the return springs 21 that is transmitted to the movable shade 14A via the worm 26. At this time, the movable shades 14A are in blocking position, the blocking section 15 extends in the horizontal direction, and thus a bottom end portion of the light transmission hole 12a is obstructed by the blocking section 15.

When the shade drive mechanism 18A is used, the second stoppers 12c are not provided on the attachment frame 12.

When the drive motor 19A is energized and the drive motor 19A begins to be rotated in a state where the movable shade 14A is in the blocking position, the worm 26 is rotated along with the rotation of the drive motor 19A against the urging force of the return spring 21.

When the worm 26 is rotated, the worm wheel section 16c is advanced, and the movable shade 14A is pivoted toward the unblocking position. At this time, the gear ratio between the worm 26 and the worm wheel section 16c is set approximately 30:1, for example, and the movable shade 14A is pivoted at a significantly lower speed as compared to a speed at which the worm 26 is rotated.

The movable shade 14A that is pivoted toward the unblocking position is restricted from being pivoted when the stopper guide protrusion 26a of the worm 26 comes into contact with the stopper pin 22b provided on the motor case 22A, and thus reaches the unblocking position. The movable shade 14A is held in the unblocking position by the continuous energization of the drive motor 19A.

When the drive motor 19A stops being energized in a state where the movable shade 14A is in the unblocking position, the worm 26 is rotated in the direction opposite to the previous direction by the urging force of the return spring 21. and the movable shade 14A is pivoted toward the blocking position. When the restricted section 17A comes into contact with the first stoppers 12b of the attachment frame 12, the movable shade 14A is restricted from being pivoted and thus is held in the blocking position.

The shade drive mechanism 18A is configured such that the stopper pin 22b and the stopper guide protrusion 26a are provided to restrict the rotation of the worm 26 and thus the movable shade 14A is pivoted from the blocking position to the unblocking position.

Therefore, as compared to a case where the movable shade 14A is partially brought into contact with the stopper to restrict the pivotal movement of the movable shade 14A during the rotation of the drive motor 19A, the gear teeth of the worm 26 are less likely to be caught in the worm wheel section 16c, and thus the smooth operations of the worm 26 and the movable shade 14A is assured.

As described above, in the vehicular headlamp 1 that is provided with the shade drive mechanism 18A, the movable shade 14A is pivoted by using the worm 26, and the reduction gear is not used. Therefore, it is possible to prevent a defect such as failure in movement of the movable shade caused by the decreased durability of the gear teeth resulted from the acquisition of the high reduction gear ratio. This is useful for maintaining the favorable moving state of the movable shade 14A.

Furthermore, because the movable shade 14A is pivoted by using the worm 26, reduction in size can be achieved.

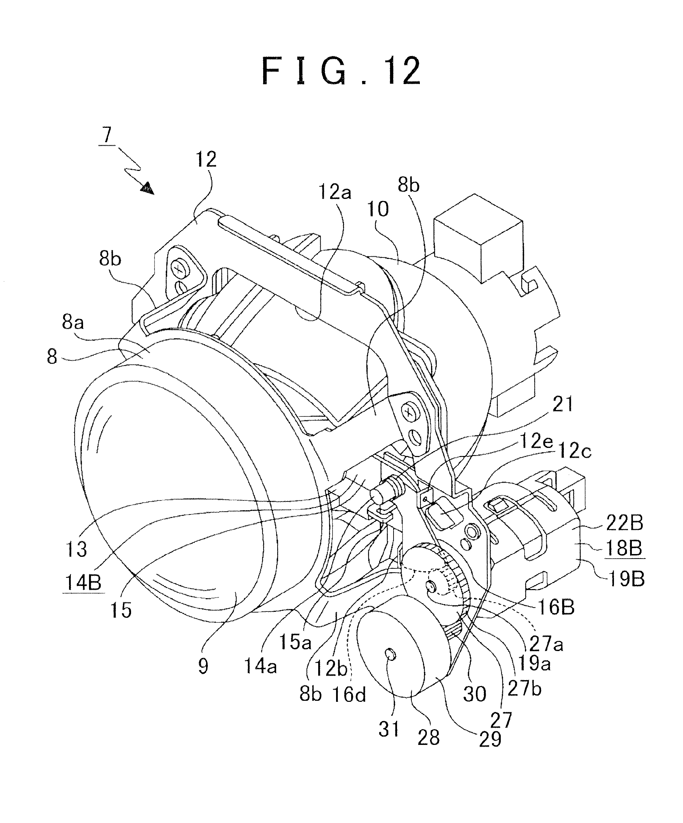

Next, a description will be made of a shade drive mechanism 18B according to a second modification (see FIG. 12).

When the shade drive mechanism 18B according to the second modification is used, a movable shade 14B is used.

The movable shade 14B is formed of the blocking section 15 that extends generally in the lateral direction and an actuated section 16B that protrudes generally downward from the outer end of the blocking section 15. The pivot 14a is provided in a continuous portion between the blocking section 15 and the actuated section 16B. A spring engagement protrusion 15a is provided on the blocking section 15 of the movable shade 14B in a position near the actuated section 16B.

A driven gear section 16d is formed on an outer end of the actuated section 16B.

When the shade drive mechanism 18B is used, the attachment frame 12 is provided with the first stoppers 12b, 12b on its lower side and the second stoppers 12c, 12c on its upper side. The attachment frame 12 is also provided with spring support pieces 12e, 12e near the second stoppers 12c, 12c.

The shade drive mechanisms 18B, 18B are attached to the right and left ends on the rear surface of the attachment frame 12. The shade drive mechanism 18B has a drive motor 19B, an overdrive gear 27 that is connected to the power output shaft 19a of the drive motor 19B, a flywheel 28 that meshes with the overdrive gear 27, and the return spring 21 that is supported by the pivot 14a of the movable shade 14B.

The drive motor 19B has a motor case 22B and the motor main body (not shown) that is disposed in the motor case 22B, and the power output shaft 19a protrudes toward the front from the motor case 22B.

The overdrive gear 27 and the flywheel 28 are provided between the movable shade 14B and the drive motor 19B and function as the shade control means that control a moving state (pivotal movement state) of the movable shade 14B.

The overdrive gear 27 is provided such that a first gear section 27a located on the rear side and a second gear section 27b having a larger diameter than the first gear section 27a and located on the front side are coaxially arranged.

The flywheel 28 is provided such that a weighted section 29 located on the front side and a transmission gear section 30 located on the rear side are coaxially arranged, and is rotatably supported by the attachment frame 12 via a support shaft 31. A diameter of the transmission gear section 30 of the flywheel 28 is set smaller than a diameter of the second gear section 27b of the overdrive gear 27. In the flywheel 28, the transmission gear section 30 meshes with the second gear section 27b of the overdrive gear 27.

The overdrive gear 27 is connected to the power output shaft 19a, and the overdrive gear 27 and the flywheel 28 are rotated along with the rotation of the drive motor 19B.

One end of the return spring 21 engages with the spring support piece 12e of the attachment frame 12 while the other end thereof engages with the spring engagement protrusion 15a that is provided on the movable shade 14B.

The movable shade 14B is urged by the return spring 21 in an opposite direction from a direction that the movable shade 14B is pivoted along with the rotation of the drive motor 19B.

When the drive motor 19B is not energized, the actuated section 16B of the movable shade 14B is pressed against and in contact with the first stopper 12b of the attachment frame 12 by the urging force of the return spring 21. At this time, the movable shade 14B is in the blocking position, the blocking section 15 extends in the horizontal direction, and thus the bottom end portion of the light transmission hole 12a is obstructed by the blocking section 15.

When the drive motor 19B is energized and the drive motor 19B begins to be rotated in a state where the movable shade 14B is in the blocking position, the overdrive gear 27 and the flywheel 28 rotate along with the rotation of the drive motor 19B against the urging force of the return spring 21.

When the overdrive gear 27 is rotated, the driven gear section 16d is advanced, and the movable shade 14B is pivoted toward the unblocking position. At this time, the gear ratio between the driven gear section 16d of the movable shade 14B and the first gear section 27a of the overdrive gear 27 is set approximately 7:1 to 10:1. and the movable shade 14B is pivoted at significantly reduced speed with respect to the rotation of the drive motor 19B.

In addition, because the transmission gear section 30 of the flywheel 28 meshes with the overdrive gear 27, the movable shade 14B is pivoted at low speed by the power of the flywheel 28.

The movable shade 14B that has been pivoted toward the unblocking position is restricted from being pivoted when the actuated section 16B comes into contact with the second stopper 12c of the attachment frame 12, and thus reaches the unblocking position. The movable shade 14B is held in the unblocking position by the continuous energization of the drive motor 19B.

When the drive motor 19B stops being energized in a state where the movable shade 14B is in the unblocking position, the overdrive gear 27 and the flywheel 28 are rotated in the direction opposite to the previous direction by the urging force of the return spring 21, and the movable shade 14B is pivoted in the direction opposite to the previous direction toward the blocking position by the urging force of the return spring 21. When the actuated section 16B comes into contact with the first stopper 12b of the attachment frame 12, the movable shade 14B is restricted from being pivoted and thus is held in the blocking position. At this time again, because the transmission gear section 30 of the flywheel 28 meshes with the overdrive gear 27, the movable shade 14B is pivoted at low speed by the power of the flywheel 28.

As described above, the movable shade 14B is pivoted by transmitting the power of the flywheel 28 in the vehicular headlamp 1 that is provided with the shade drive mechanism 18B, and thus the moving speed (pivotal movement speed) of the movable shade 14B is decreased, reducing the impact generated when the movable shade 14B contacts the first stopper 12b and the second stopper 12c. Therefore, the favorable moving state of the movable shade 14B can be secured.

In addition, because the moving speed of the movable shade 14B is decreased, gear teeth of each member are not affected by a significant impact, and thus each member is less likely to wear. Therefore, the favorable moving state of the movable shade 14B can be achieved.

Furthermore, because the moving speed of the movable shade 14B is decreased, the radiation mode is not switched instantly, and thus it is possible to suppress the occurrence of a sense of discomfort to a driver.

It should be noted that, with use of the flywheel 28 such as the one described above, depending on a power (energy) of the flywheel 28, the reduction of the impact caused by the contact of the movable shade 14B with the second stopper 12c may be insufficient when the movable shade 14B is pivoted from the blocking position to the unblocking position.

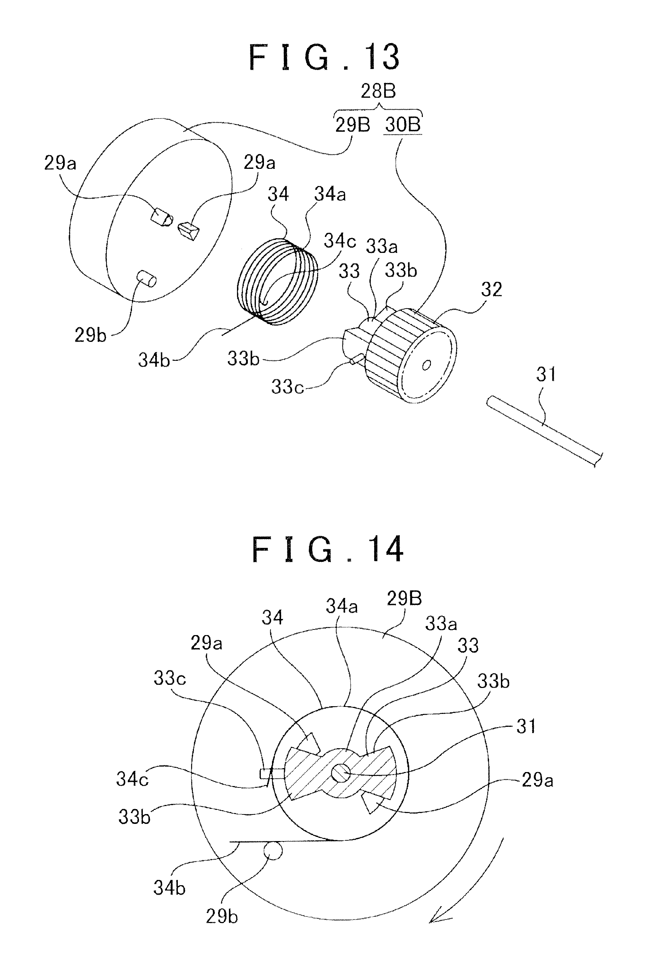

Therefore, in order to further reduce the impact caused by the contact of the movable shade 14B with the second stopper 12c, a flywheel 28B, which will be described below, may be used instead of the flywheel 28 (see FIG. 13 to FIG. 16).

In the flywheel 28B. the weighted section 29B is rotatably supported by the transmission gear section 30B via the support shaft 31 (see FIG. 13).

Actuated protrusions 29a, 29a that protrude rearward are provided on a rear surface of the weighted section 29B, and the actuated protrusions 29a, 29a are positioned oppositely from each other at 180° on the same radius in reference to the center axis of the weighted section 29B. A spring engagement shaft 29b that protrudes rearward is provided on the rear surface of the weighted section 29B in a position closer to the outer peripheral side than the actuated protrusions 29a, 29a.

The transmission gear section 30B is constructed such that a gear body 32 and an actuating body 33 that protrudes toward the front from the gear body 32 are formed integrally. The actuating body 33 is formed of a central shaft section 33a that protrudes toward the front from the center portion of the gear body 32 and a pair of actuating sections 33b, 33b that protrude laterally from the central shaft section 33a in opposite directions from each other. The actuating body 33 is provided with a spring engagement shaft section 33c that protrudes laterally from the one actuating section 33b.

In a state where the weighted section 29B is supported by the transmission gear section 30B, a twisted coil spring 34 is supported therebetween. A coil section 34a of the twisted coil spring 34 is fitted onto and supported by the actuating body 33, and one end 34b engages with the spring engagement shaft 29b of the weighted section 29B while the other end 34c engages with a spring engagement shaft section 33c of the transmission gear section 30B.

Accordingly, relative to the transmission gear section 30B, the weighted section 29B is urged by the twisted coil spring 34 in an opposite direction from a direction that the weighted section 29B is rotated along with the rotation of the drive motor 19B.

When the drive motor 19B is energized and the drive motor 19B begins to be rotated in a state where the movable shade 14B is in the blocking position, the movable shade 14 is pivoted to the unblocking position along with the rotations of the overdrive gear 27 and the flywheel 28.

When the movable shade 14B is pivoted from the blocking position to the unblocking position, the flywheel 28B is in the state where the actuated protrusions 29a, 29a of the weighted section 29B are respectively in contact with the actuating sections 33b, 33b of the transmission gear section 30B, and pressed against the actuating sections 33b, 33b, and thus the weighted section 29B and the transmission gear section 30B are integrally rotated clockwise when seen from rear (see FIG. 14).

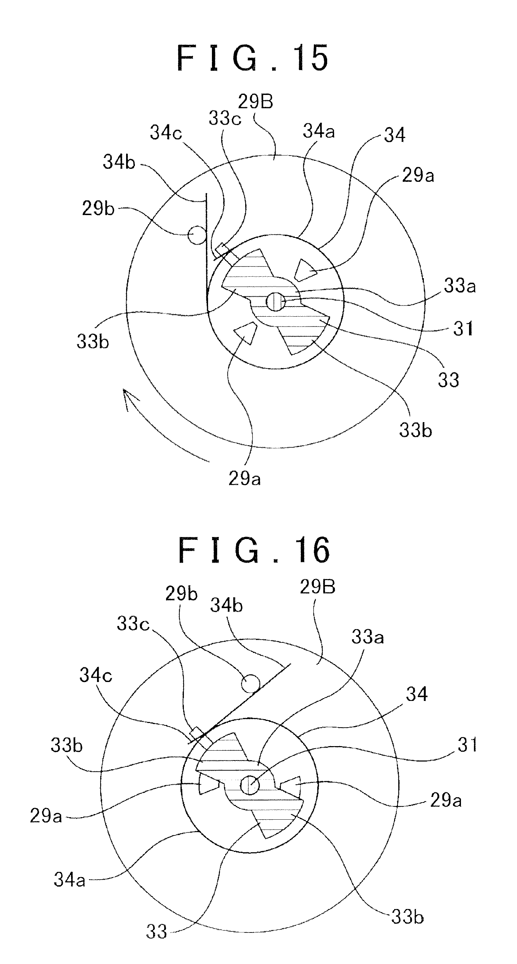

When the movable shade 14B reaches the unblocking position, the pivotal movement of the movable shade 14B stops and the transmission gear section 30B therefore stops being rotated. However, because the weighted section 29B is rotatable with respect to the transmission gear section 30B, the weighted section 29B keeps being rotated clockwise due to inertia (see FIG. 15). When the transmission gear section 30B stops being rotated and the weighted section 29B keeps being rotated, the urging force of the twisted coil spring 34 applied to the weighted section 29B in a counterclockwise direction gradually increases with the rotation of the weighted section 29. Therefore, as the rotation amount of the weighted section 29B increases, the rotational speed of the weighted section 29B decreases by the urging force of the twisted coil spring 34.

When the weighted section 29B is further rotated and the actuated protrusions 29a, 29a respectively come into contact with the actuating sections 33b, 33b of the transmission gear section 30B, the weighted section 29B stops being rotated (see FIG. 16). By this time, the rotational speed of the weighted section 29B is significantly decreased by the urging force of the twisted coil spring 34, and thus the impact between the actuated protrusions 29a, 29a and the actuating sections 33b, 33b at the time of contact is reduced.

With use of the flywheel 28B as described above, when the movable shade 14B is pivoted from the blocking position to the unblocking position, the flywheel 28B keeps being rotated and the rotational speed thereof gradually decreases. Therefore, it is possible to sufficiently mitigate the impact at the time when the movable shade 14B comes into contact with the second stopper 12c and is pivoted to the unblocking position.

When the drive motor 19B stops being energized in a state where the movable shade 14B is in the unblocking position, the overdrive gear 27 and the flywheel 28B are rotated in the direction opposite to the previous direction by the urging force of the return spring 21, and the movable shade 14B is pivoted in the direction opposite to the previous direction toward the blocking position by the urging force of the return spring 21. At this time, the actuated protrusions 29a, 29a are pressed against the actuating sections 33b, 33b respectively, and the weighted section 29B and the transmission gear section 30B are integrally rotated in the counterclockwise direction when seen from rear.

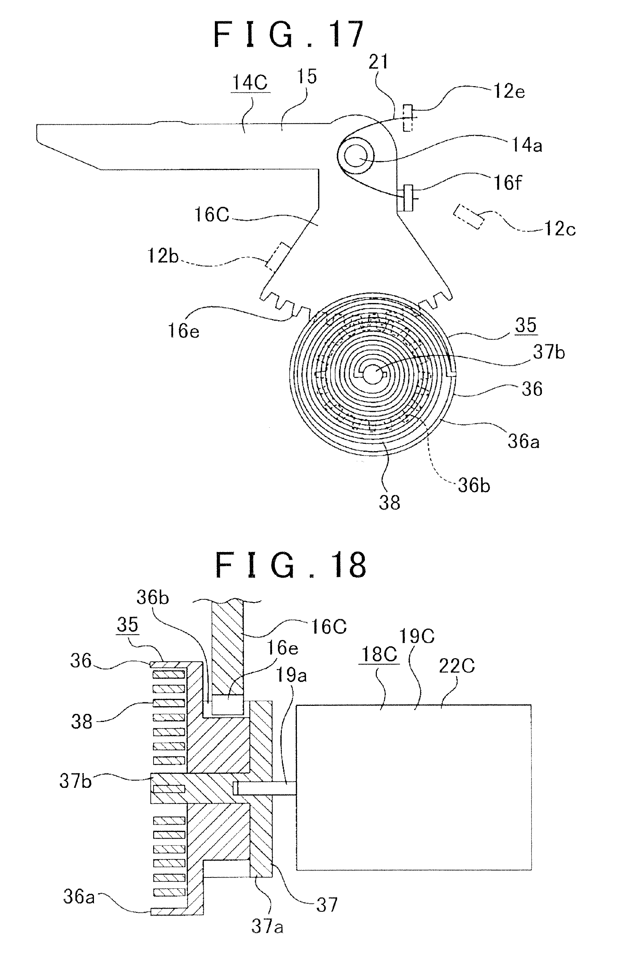

Next, a description will be made of a shade drive mechanism 18C according to a third modification (see FIG. 17 and FIG. 18).

When the shade drive mechanism 18C according to the third modification is used, a movable shade 14C is used.

The movable shade 14C is formed of the blocking section 15 that extends generally in the lateral direction and an actuated section 16C that protrudes generally downward from the outer end of the blocking section 15. and the pivot 14a is provided in a continuous portion between the blocking section 15 and the actuated section 16C.

A driven gear section 16e is formed in the bottom end portion of` the actuated section 16C. The actuated section 16C is provided with a spring engagement protrusion 16f.

In addition, when the shade drive mechanism 18C is used, the attachment frame 12 is provided with first stoppers 12b, 12b and second stoppers 12c, 12c that are spaced from each other in the lateral direction with the actuated section 16C disposed therebetween. The attachment frame 12 is also provided with spring support pieces 12e, 12e.

The shade drive mechanisms 18C, 18C are respectively provided at the right and left ends on the rear surface of the attachment frame 12. The shade drive mechanism 18C has a drive motor 19C, a drive unit 35, and the return spring 21.

The drive motor 19C has a motor case 22C and a motor body (not shown) that is disposed in the motor case 22C, and the power output shaft 19a protrudes forward from the motor case 22C.

The drive unit 35 is formed of a case body 36 that meshes with a driven gear section 16e of the movable shade 14C, a rotary drive body 37 that is rotatably supported by the case body 36 and is connected to the power output shaft 19a of the drive motor 19C, and a spiral spring 38 that is disposed inside the case body 36.

The drive unit 35 is provided between the movable shade 14C and the drive motor 19C and functions as a shade control means that controls a moving state (pivotal movement state) of the movable shade 14C.

The case body 36 is formed of a case section 36a that opens to the front and a drive gear section 36b that protrudes rearward from a rear surface of the case section 36a. In the case body 36, the drive gear section 36b meshes with the driven gear section 16e of the movable shade 14C.

The rotary drive body 37 is formed of a connecting plate section 37a having a circular disc shape and a supported shaft section 37b that protrudes forward from a center portion of the connecting plate section 37a, and the supported shaft section 37b is inserted through the case body 36 from the rear and is rotatable supported by the case body 36. A front end of the supported shaft section 37b is located inside the case section 36a of the case body 36.

A center portion of the connecting plate section 37a in the rotary drive body 37 is connected to the power output shaft 19a of the drive motor 19C.

One end of the spiral spring 38 is connected to the outer periphery of the case section 36a of the case body 36 while the other end thereof is connected to the front end of the supported shaft section 37b of the rotary drive body 37 that is positioned inside the case section 36a.

One end of the return spring 21 engages with the spring support piece 12e of the attachment frame 12, while the other end thereof engages with the spring engagement protrusion 16f provided on the movable shade 14C.

The movable shade 14C is urged by the return spring 21 in an opposite direction from a direction that the movable shade 14C is pivoted along with the rotation of the drive motor 19C.

When the drive motor 19C is not energized, the actuated section 16C of the movable shade 14C is pressed against and in contact with the first stopper 12b of the attachment frame 12 by the urging force of the return spring 21. At this time, the movable shade 14C is in the blocking position, the blocking section 15 extends in the horizontal direction, and thus the bottom end portion of the light transmission hole 12a is obstructed by the blocking sections 15.

When the drive motor 19C is energized and the drive motor 19C begins to be rotated in a state where the movable shade 14C is in the blocking position, the rotary drive body 37 of the drive unit 35 is rotated along with the rotation of the drive motor 19C against the urging force of the return spring 21. When the rotary drive body 37 is rotated, the spiral spring 38 is winded in a direction that a diameter thereof becomes smaller, and the case body 36 is rotated along with the winding of the spiral spring 38.

When the case body 36 is rotated, the driven gear section 16e is advanced, and the movable shade 14C is pivoted toward the unblocking position. At this time, the gear ratio between the driven gear section 16e of the movable shade 14C and the drive gear section 36b of the case body 36 is set approximately 7:1 to 10:1, for example, and thus the movable shade 14C is pivoted at significantly reduced speed with respect to the rotation of the drive motor 19C.

In addition, because the case body 36 is rotated along with the winding of the spiral spring 38, the rotational speed of the case body 36 is lower than the rotational speed of the rotary drive body 37, and thus the movable shade 14C is pivoted at low speed.

The movable shade 14C that has been pivoted toward the unblocking position is restricted from being pivoted when the actuated section 16C comes into contact with the second stopper 12c of the attachment frame 12, and thus reaches the unblocking position. The movable shade 14C is held in the unblocking position by the continuous energization of the drive motor 19C.

When the drive motor 19C stops being energized in a state where the movable shade 14C is in the unblocking position, the case body 36 is rotated in the direction opposite to the previous direction by the urging force of the return spring 21, and the movable shade 14C is pivoted in the direction opposite to the previous direction toward the blocking position by the urging force of the return spring 21. At this time, the spiral spring 38 is winded back along with the rotation of the case body 36, and the rotary drive body 37 is pivoted along with the back-winding of the spiral spring 38.

The pivotal movement of the movable shade 14C is restricted when the actuated section 16C comes into contact with the first stopper 12b of the attachment frame 12, and is held in the blocking position.

As described above, in the vehicular headlamp 1 that is provided with the shade drive mechanism 18C, because the movable shade 14C is pivoted with the spiral spring 38 being interposed between the case body 36 and the rotary drive body 37, the moving speed (pivotal movement speed) of the movable shade 14C is decreased, and thus the impact caused by the contact between the movable shade 14C and the second stopper 12c is mitigated. Therefore, the favorable moving state of the movable shade 14C can be maintained.

In addition, because the moving speed of the movable shade 14C is decreased, gear teeth of each member are not affected by a significant impact, and thus each member is less likely to wear. Therefore, the stable moving state of the movable shade 14C can be obtained.

Furthermore, because the moving speed of the movable shade 14C is low, the radiation mode is not switched instantly, and thus it is possible to suppress the occurrence of a sense of discomfort to a driver.

As described above, in the vehicular headlamp 1, the moving states of the movable shades 14, 14A, 14B, 14C are controlled respectively by the shade control means, it is possible to moderate the moving state of the movable shades 14, 14A, 14B, 14C.

Any of shapes and structures of components shown in the above described embodiments for carrying out the invention is nothing but an example of implementation of the invention, and the scope of the present invention should not be construed as being limited only to the above-described embodiments.

## Claims

1. A vehicular headlamp (1) **characterized by** comprising:
a light source (11) that emits light;
a reflector (10) that reflects the light emitted by the light source (11);
a projection lens (9) that projects and irradiates the light emitted by the light source (11);
a fixed shade (13) that partially blocks the light emitted by the light source (11);
a movable shade (14; 14A; 14B; 14C) that is movable with respect to the fixed shade (13) and is capable of partially blocking the light emitted by the light source (11);
a drive motor (19; 19A; 19B; 19C) that moves the movable shade (14; 14A; 14B; 14C); and
shade control means (20; 26; 27, 28; 35) that is provided between the movable shade (14; 14A; 14B; 14C) and the drive motor (19; 19A; 19B; 19C) and is configured to control a moving state of the movable shade (14; 14A; 14B; 14C).

2. The vehicular headlamp (1) according to claim 1, wherein
the shade control means (20; 26; 27, 28; 35) is speed change control means (20; 26; 27, 28; 35) connecting between the movable shade (14; 14A; 14B; 14C) and the drive motor (19; 19A; 19B; 19C) and configured to suppress rapid change in speed of movement of the movable shade (14; 14A; 14B; 14C) when the movable shade (14; 14A; 14B; 14C) starts to be moved by the drive motor (19; 19A; 198; 19C).

3. The vehicular headlamp (1) according to claim 2, wherein
the speed change control means (20, 26) is configured to suppress the rapid change in speed of movement via a mechanical structure.

4. The vehicular headlamp (1) according to claim 2 or 3, wherein
the speed change control means (20) includes a rotary body (23) that is rotated by the drive motor (19), the rotary body having an actuating shaft (25) that is positioned so as to be offset from a center of rotation of the rotary body (23), and
the speed change control means (20) is configured such that a direction of movement of the actuating shaft (25) and a direction of movement of a point of contact between the actuating shaft (25) and the movable shade (14) form an angle between 45° and 90° inclusive when the movable shade (14) starts to be moved by the drive motor (19).

5. The vehicular headlamp (1) according to any one of claims 1 to 3, wherein
the shade control means (20) includes a drive member (20) that has:
a connecting section (24) that is connected to a power output shaft (19a) of the drive motor (19); and
an actuating shaft (25) that is located on an outer peripheral side of the power output shaft (19a) and protrudes from the connecting section (24), and
the shade control means (20) is configured such that the drive member (20) is rotated by a driving force of the drive motor (19) and that the actuating shaft (25) presses the movable shade (14) within a part of a rotational range of the drive member (20) to move the movable shade (14).

6. The vehicular headlamp (1) according to any one of claims 1 to 3, wherein a worm wheel section (16c) is provided on the movable shade (14A), and
the shade control means (26) includes a worm (26) that is connected to the power output shaft (19a) of the drive motor (19A).

7. The vehicular headlamp (1) according to claim 2, wherein
the speed change control means (27, 28) is configured to suppress the rapid change in speed of movement using inertia.

8. The vehicular headlamp (1) according to any one of claims 1, 2, and 7, wherein
a driven gear section (16d) is provided on the movable shade (14B),
the shade control means (27, 28) includes:
a flywheel (28) that has a transmission gear section (30): and
an overdrive gear (27) that has a first gear section (27a) connected to the power output shaft (19a) of the drive motor (19B) and meshing with the driven gear section (16d) of the movable shade (14B), and a second gear section (27b) meshing with the transmission gear section (30) of the flywheel (28).

9. The vehicular headlamp (1) according to claim 2, wherein
the speed change control means (35) is configured to suppress the rapid change in speed of movement by transmitting a driving force from the drive motor (19C) to the movable shade (14C) via an elastic body.

10. The vehicular headlamp (1) according to claim 9, wherein
the elastic body is a spiral spring (38).

11. The vehicular headlamp (1) according to any one of claims 1, 2, and 9, wherein a driven gear section (16e) is provided on the movable shade (14C),
the shade control means (35) includes:
a case body (36) that has a drive gear section (36b) meshing with the driven gear section (16e);
a rotary drive body (37) that is connected to the power output shaft (19a) of the drive motor (19C) and is rotated with respect to the case body (36) along with the rotation of the drive motor (19C); and
a spiral spring (38), one end of which is connected to the case body (36) and the other end of which is connected to the rotary drive body (37).
